# EUROPEAN PATENT SPECIFICATION

(11) **EP 1 553 040 B1**
(45) Date of publication and mention of the grant of the patent: **11.08.2010**
(21) Application number: 03733503.1
(22) Date of filing: 19.06.2003
(51) Int. Cl.: B66B 11/08, H02K 16/00

(54) **DRIVER OF ELEVATOR**
ANTRIEBSVORRICHTUNG FÜR AUFZUG
MACHINERIE D'ASCENSEUR

(30) Priority: 18.10.2002 JP 2002304705
(43) Date of publication of application: 13.07.2005
(73) Proprietor: MITSUBISHI DENKI KABUSHIKI KAISHA, Chiyoda-ku Tokyo 100-8310 (JP)
(72) Inventor: FUKAGAI, S.,c/o Mitsubishi Electric Eng. Co., Ltd., Tokyo 102-0073 (JP)
(74) Representative: HOFFMANN EITLE
(86) International application number: PCT/JP2003/007810
(87) International publication number: WO 2004/035450

(56) References cited:
- EP-A1- 0 834 463
- EP-A2- 1 043 261
- EP-A2- 1 074 506
- WO-A-95/00432
- JP-A- 5 300 709
- JP-A- 7 172 716
- JP-A- 59 133 188
- JP-A- 59 175 368
- JP-A- 2000 072 343
- JP-A- 2000 128 453
- JP-A- 2001 226 048
- JP-U- 60 166 272
- US-B1- 6 355 999

## Description

### TECHNICAL FIELD

The present invention relates to an elevator driving device for raising and lowering an elevator car.

### BACKGROUND ART

As an example of a conventional elevator apparatus for achieving an improvement in passenger transportation capacity, Japanese Patent Application No. 59-133188 discloses a one-shaft-double-car type elevator apparatus in which two cars are raised and lowered in the same hoistway. In this conventional elevator apparatus, two separate hoists for raising and lowering two cars are used. Each hoist is installed in a machine room at the top of the hoistway. As a result, the space for the machine rooms constitute an obstacle to space saving for the elevator apparatus as a whole.

### DISCLOSURE OF THE INVENTION

The present invention has been made with a view toward solving the above problem. It is an object of the present invention to provide an elevator driving device which allows a reduction in installation space.

According to the present invention, an elevator driving device comprises a first hoist having an annular, first motor portion and an annular, first rotational member, and a second hoist having a second motor portion arranged on the inner side of the first hoist and a second rotational member. The first rotational member includes a first driving sheave portion which is rotated by the first motor portion and around which a first main rope is wrapped. The second rotational member includes a second driving sheave portion which is rotated by the second motor portion and around which a second main rope is wrapped. The elevator driving device raises and lowers a first car suspended by the first main rope and a second car suspended by the second main rope independently.

### BRIEF DESCRIPTION OF THE DRAWINGS

Fig. 1 is a longitudinal sectional view of an elevator apparatus according to Embodiment 1 of the present invention;
Fig. 2 is a front view of the driving device of Fig. 1;
Fig. 3 is a sectional view taken along the line III-III of Fig. 2;
Fig. 4 is a partially cutaway front view of a driving device according to Embodiment 2 of the present invention; and
Fig. 5 is a sectional view taken along the line V-V of Fig. 4.

### BEST MODE FOR CARRYING OUT THE INVENTION

Preferred embodiments of the present invention will now be described with reference to the drawings.

### Embodiment 1

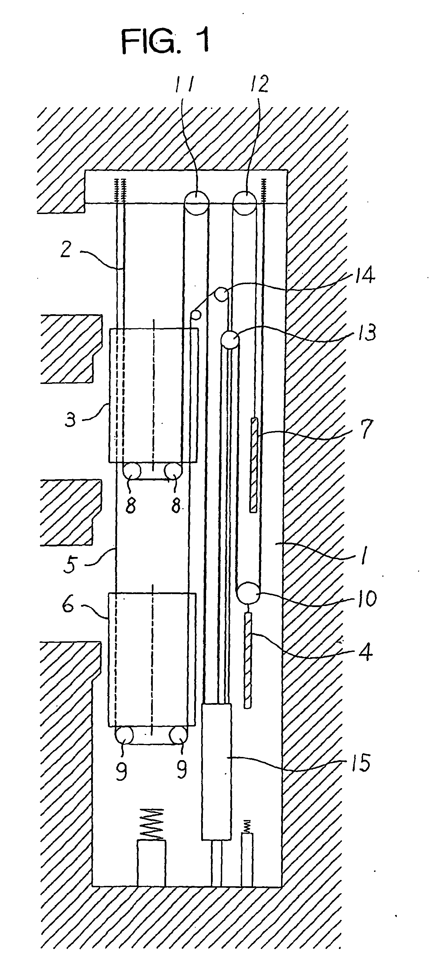

Fig. 1 is a longitudinal sectional viewof an elevator apparatus according to Embodiment 1 of the present invention. In the drawing, in a hoistway 1, an upper car 3 and an upper car counterweight 4 are suspended by a plurality of first main ropes 2. Further, in the hoistway 1, a lower car 6 and a lower car counterweight 7 are suspended by a plurality of second main ropes 5. The upper car 3 is arranged above the lower car 6, and the upper car counterweight 4 is arranged below the lower car counterweight 7. In Fig. 1, to distinguish between the first main ropes 2 and the second main ropes 5, the first main ropes 2 are represented by a thick line. Further, in Fig. 1, for the sake of simplicity, the first main ropes 2 and the second main ropes 5 are each shown to consist of a single rope.

Under the upper car 3, there are provided a pair of upper car suspension sheaves 8 around which the first main ropes 2 are wrapped. Under the lower car 6, there are provided a pair of lower car suspension sheaves 9 around which the second main ropes 5 are wrapped. On top of the upper car counterweight 4, there is provided a counterweight suspension sheave 10 around which the first main ropes 2 are wrapped.

In the upper end portion of the interior of the hoistway 1, there are provided an upper car first return sheave 11 around which the first main ropes 2 are wrapped, and a lower car first return sheave 12 around which the second main ropes 5 are wrapped. In the vicinity of the upper end portion of the interior of the hoistway 1, there are provided an upper car second return sheave 13 around which the first main ropes 2 are wrapped, and a lower car second return sheave 14 around which the second main ropes 5 are wrapped. Installed at the bottom of the hoistway 1 is a driving device 15 for raising and lowering the upper car 3 and the upper car counterweight 4 and for raising and lowering the lower car and the lower car counterweight 7.

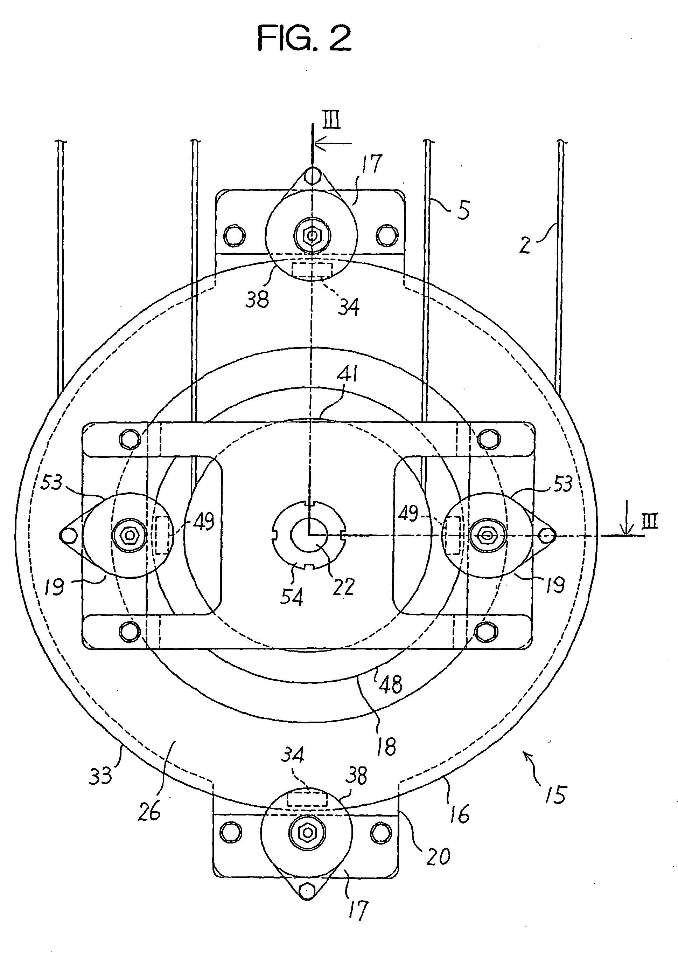

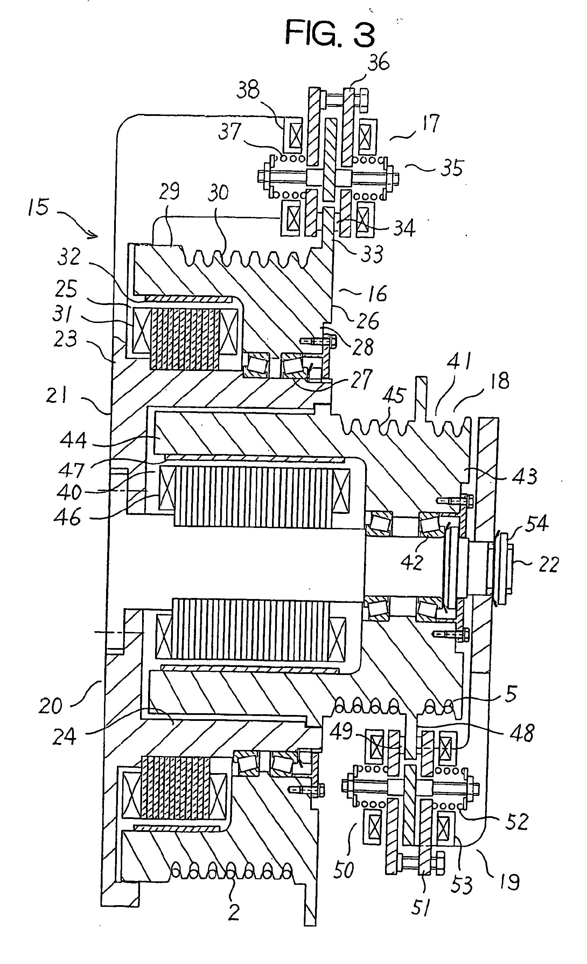

Fig. 2 is a front view showing the driving device 15 of Fig. 1, and Fig. 3 is a sectional view taken along the line III-III of Fig. 2. In the drawings, the driving device 15 is equipped with an annular, first hoist 16, a first brake device 17 serving as a braking device for the first hoist 16, a second hoist 18 a part of which is arranged inside the first hoist 16, a second brake device 19 serving as a braking device for the second hoist 18, and a support member 20 supporting the first hoist 16, the first brake device 17, the second hoist 18, and the second brake device 19.

The support member 20 is fixed to the bottom of the hoistway 1. Further, the support member 20 has a support frame 21 and a main shaft 22 fixed to the support frame 21. The support frame 21 has a support frame main body 23 to which the main shaft 22 is secured, and a support cylinder portion 24 extending from the support frame main body 23 and arranged so as to be coaxial with the main shaft 22. The extension length of the support cylinder portion 24 is smaller than the length of the main shaft 22. The annular, first hoist 16 is mounted to the outer peripheral surface of the support cylinder portion 24. The second hoist 18 is mounted to the main shaft 22.

The first hoist 16 has an annular, firstmotor portion 25 mounted to the outer peripheral surface on the support frame main body 23 side of the support cylinder portion 24, and an annular, first rotational member 26 rotatably mounted to the support cylinder portion 24.

The first rotational member 26 has a first rotational member main body 28 mounted to the forward end portion side of the support cylinder portion 24 through the intermediation of a first bearing 27, a first rotational member cylinder portion 29 extending from the outer peripheral portion of the first rotational member main body 28 toward the support frame main body 23 and arranged in the periphery of the first motor portion 25, and a first driving sheave portion 30 formed in a part of the outer periphery of the first rotational member cylinder portion 29 and in the outer periphery of the first rotational member main body 28. The first main ropes 2 are wrapped around the first driving sheave portion 30. The rotation axis of the first rotational member 26 is coaxial with the axis of the main shaft 22.

The first motor portion 25 has an annular, first stator 31 fixed to the outer peripheral surface of the support cylinder portion 24, and a first armature 32 consisting of a plurality of permanent magnets fixed to the inner surface of the first rotational member cylinder portion 29 so as to be opposed to the first stator 31. The first armature 32 is arranged in an annular fashion around the axis of the main shaft 22. The first rotational member 26 is rotated around the axis of the main shaft 22 by energizing the first stator 31.

The first brake device 17 has a first brake disc 33 extending from the outer peripheral end portion of the first driving sheave portion 30, a first brake pad 34 serving as a first braking member capable of moving toward and away from the first brake disc 33, and a first driving mechanism 35 for moving the first brake pad 34 toward and away from the first brake disc 33. The first brake disc 33 extends perpendicularly with respect to the axis of the main shaft 22, and is rotated integrally with the first rotational member 26.

Two first brake pads 34 are arranged so as to be spaced apart from each other in the circumferential direction of the first brake disc 33 (Fig. 2). Here, the first brake pads 34 are arranged symmetrically with respect to the axis of the main shaft 22. The first driving mechanisms 35 are arranged at the same positions as the first brake pads 34 with respect to the circumferential direction of the first brake disc 33 (Fig. 2). The respective first driving mechanisms 35 are detachably attached to the support member 20. The first brake pads 34 are arranged such that the first driving mechanisms 35 do not come into contact with the first and second main ropes 2 and 5. Here, the first brake pads 34 are arranged in a vertical plane passing the axis of the main shaft 22.

Each first driving mechanism 35 has a first actuator portion 36 to which the first brake pad 34 is attached, a first braking spring 37 serving as an urging portion for urging the first actuator portion 36 such that the first brake pad 34 comes into contact with the first brake disc 33, and a first electromagnetic magnet 38 for separating the first brake pad 34 from the first brake disc 33 against the urging force of the first braking spring 37.

Further, when the first brake device 17 operates, each first driving mechanism 35 brings each first brake pad 34 into contact with the first brake disc 33 with minimum time lag. The rotation of the first brake disc 33 is braked when the first brake pad 34 comes into contact with the first brake disc 33.

The second hoist 18 has a second motor portion 40 mounted to the support frame 23 side portion of the main shaft 22, and a second rotational member 41 rotatably mounted to the main shaft 22. The outer diameter of the second rotational member 41 is smaller than that of the first rotational member 26.

The second rotational member 41 has a second rotational member main body 43 mounted to the forward end portion side of the main shaft 22 through the intermediation of a second bearing 42, a second rotational member cylinder portion 44 extending from the outer peripheral portion of the second rotational member main body 43 toward the support frame 23 and arranged around the second motor portion 40, and a second driving sheave portion 45 formed in a part of the outer periphery of the second rotational member cylinder portion 44 and in the outer periphery of the second rotational member main body 43.

Most of the second rotational member cylinder portion 44 is arranged inside the support cylinder portion 24. The second driving sheave 45 is formed in the outer periphery of the second rotational member 41 and on the anti-support-frame-main-body-23 side with respect to the extension end portion of the support cylinder portion 24. The second main ropes 5 are wrapped around the second driving sheave portion 45. The rotation axis of the second rotational member 41 is coaxial with the axis of the main shaft 22.

The second motor portion 40 has a second stator 46 fixed to the main shaft 22, and a second armature 47 consisting of a plurality of permanent magnets fixed to the inner surface of the second rotational member cylinder portion 44 so as to be opposed to the second stator 46. The second armature 47 is arranged in an annular fashion around the axis of the main shaft 22. The second rotational member 41 is rotated around the axis of the main shaft 22 by energizing the second stator 46.

The second brake device 19 has a second brake disc 48 extending from the outer peripheral portion of the second driving sheave portion 45, a pair of second brake pads 49 serving as a second braking member capable of moving toward and away from both side surfaces of the second brake disc 48, and a second driving mechanism 50 for moving the second brake pad 49 toward and away from the second brake disc 48. The outer diameter of the second brake disc 48 is smaller than that of the first brake disc 33. The second brake disc 48 extends perpendicularly with respect to the axis of the main shaft 22, and is rotated integrally with the second rotational member 41.

Support plates 51 supporting the second driving mechanisms 50 are fixed to the forward end portion of the main shaft 22 by a fixing nut 54. The second driving mechanisms 50 are detachably mounted to the support plates 51.

Two second brake pads 49 are arranged so as to be spaced apart from each other in the circumferential direction of the second brake disc 48 (Fig. 2). Here, the second brake pads 49 are arranged symmetrically with respect to the axis of the main shaft 22. The second driving mechanisms 50 are arranged at the same positions as the second brake pads 49 with respect to the circumferential direction of the second brake disc 48 (Fig. 2). The second brake pads 49 are arranged such that the second driving mechanisms 50 do not come into contact with the first and second main ropes 2 and 5. Here, the second brake pads 49 are arranged in a horizontal plane passing the axis of the main shaft 22. That is, the first brake pads 34 and the second brake pads 49 are arranged such that the first driving mechanisms 35 do not overlap the second driving mechanisms 50 as seen along the axial direction of the main shaft 22 (Fig. 2).

Each second driving mechanism 50 has a second actuator portion 51 to which the second brake pad 49 is attached, a second braking spring 52 serving as an urging portion for urging the second actuator portion 51 such that the second brake pad 49 comes into contact with the second brake disc 48, and a second electromagnetic magnet 53 for separating the second brake pad 49 from the second brake disc 48 against the urging force of the second braking spring 52.

Further, when the second brake device 19 operates, each second driving mechanism 50 brings each second brake pad 49 into contact with the second brake disc 48 with minimum time lag. The rotation of the second brake disc 48 is braked when the second brake pad 49 comes into contact with the second brake disc 48.

Next, the operation of this embodiment will be described. When the upper car 3 is raised and lowered, the operation of the first brake device 17 is released by energizing the first electromagnetic magnets 38. At the same time, the first driving sheave portion 30 is rotated by driving the first motor portion 25, thereby raising and lowering the upper car 3.

When the upper car 3 is to be stopped, the energization of the first electromagnetic magnets 38 is interrupted with minimum time lag, and the first brake pads 34 come into contact with the first brake disc 33 with minimum time lag. By the operation of the first brake device 17, the rotation of the first brake disc 33 is braked. The upper car 3 is stopped through the braking of the first brake disc 33.

When the lower car 6 is raised and lowered, the operation of the second brake device 19 is released by energizing the second electromagnetic magnets 53. At the same time, the second driving sheave portion 45 is rotated by driving the second motor portion 40, thereby raising and lowering the lower car 6.

When the lower car 6 is to be stopped, the energization of the second electromagnetic magnets 53 is interrupted with minimum time lag, and the second brake pads 49 come into contact with the second brake disc 48 with minimum time lag. By the operation of the first brake device 19, the rotation of the second brake disc 48 is braked. The lower car 6 is stopped through the braking of the second brake disc 48.

In this elevator apparatus, the second motor portion 40 of the second hoist 18 is arranged inside the annular, first hoist 16, so that it is possible to raise and lower the upper car 3 by the first hoist 16 and to raise and lower the lower car 6 by the second hoist 18. In addition, it is possible to achieve a reduction in installation space. Thus, even in a one-shaft-double-car type elevator apparatus, the driving device 15 can be easily installed in the hoistway 1, achieving space saving for the elevator apparatus as a whole to thereby make it possible to effectively utilize the space in the building.

Further, as the first brake disc 33 extends radially outwards from the outer periphery of the first rotational member 26, and the second brake disc 48 extends radially outwards from the outer periphery of the second rotational member 41, it is possible to easily brake the rotation of the first rotational member 26 and the second rotational member 41 without increasing the thickness of the driving device 15 (axial length of the main shaft 22) more than necessary.

Similarly, as the first brake disc 33 extends from the first driving sheave portion 30, and the second brake disc 48 extends from the second driving sheave portion 45, it is possible to easily brake the rotation of the first rotational member 26 and the second rotational member 41 without increasing the thickness of the driving device 15 more than necessary.

Further, two first brake pads 34 are arranged so as to be spaced apart from each other in the circumferential direction of the first brake disc 33, and the first driving mechanisms 35 are arranged at the same positions as the first brake pads 34 with respect to the circumferential direction of the first brake disc 33, so that the burden on the first driving mechanisms 35 is dispersed, and it is possible to reduce the size of each first driving mechanism 35 while ensuring the requisite braking force, making it possible to reduce the size of the first brake device 17 as a whole.

Similarly, two second brake pads 49 are arranged so as to be spaced apart from each other in the circumferential direction of the second brake disc 48, and the second driving mechanisms 50 are arranged at the same positions as the second brake pads 49 with respect to the circumferential direction of the second brake disc 48, so that the burden on the second driving mechanisms 50 is dispersed, and it is possible to reduce the size of each second driving mechanism 50 while ensuring the requisite braking force, making it possible to reduce the size of the second brake device 19 as a whole.

Further, when the first brake device 17 operates, the first driving mechanisms 35 bring the first brake pads 34 into contact with the first brake disc 33 with a slight time lag, which causes a slight time difference in the generation of contact sounds when the first brake pads 34 come into contact with the first brake disc 33, making it possible to diminish the contact sound when the first brake pads 34 come into contact with the first brake disc 33.

Similarly, when the second brake device 19 operates, the second driving mechanisms 50 bring the second brake pads 49 into contact with the second brake disc 48 with slight time lag, which causes a slight time difference in the generation of contact sounds when the second brake pads 49 come into contact with the second brake disc 48, making it possible to diminish the contact sound when the second brake pads 49 come into contact with the second brake disc 48.

Further, the first brake pads 34 and the second brake pads 49 are arranged such that the first driving mechanisms 35 do not overlap the second driving mechanisms 50 as seen along the axial direction of the main shaft 22. As a result, it is possible to perform maintenance operations from one direction, making it possible to reduce the space needed for maintenance.

While in the above example the outer diameter of the second driving sheave portion 45 is smaller than that of the first driving sheave portion 30, it is also possible for the outer diameter of the first driving sheave portion 30 and that of the second driving sheave portion 45 to be the same. Further, it is also possible for the outer diameter of the second driving sheave portion 45 to be larger than that of the first driving sheave portion 30.

Further, even though in the above example two first brake pads 34 and two second brake pads 49 are provided, this should not be construed restrictively as it is also possible to arrange three or more of them, respectively. In this case, the first driving mechanisms 35 and the second driving mechanisms 50 are also arranged in correspondence with the first brake pads 34 and the second brake pads 49.

Further, while in the above example the second rotational member 41 rotates relative to the main shaft 22, it is also possible for the main shaft 22 and the second rotational member 41 to rotate integrally. In this case, the main shaft 22 is rotated relative to the second stator 46.

### Embodiment 2

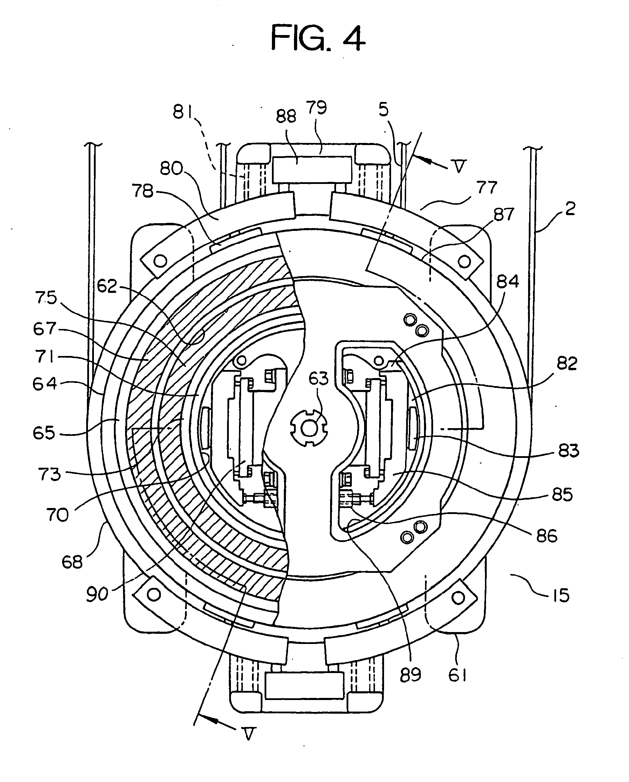

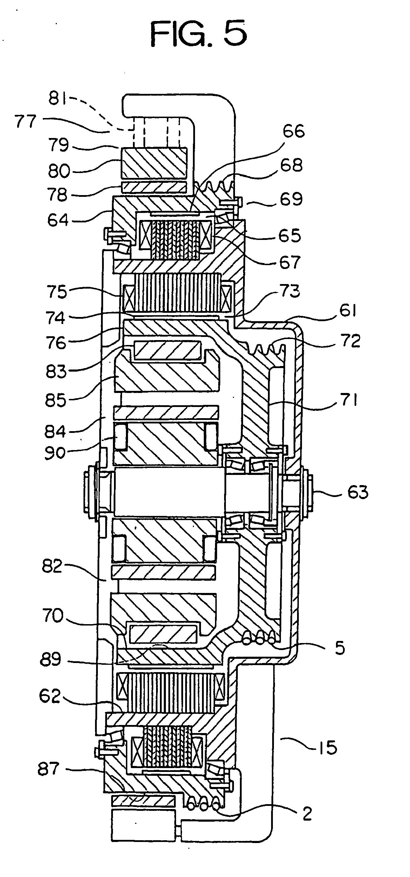

Fig. 4 is a partially cutaway front view of a driving device according to Embodiment 2 of the present invention. Fig. 5 is a sectional view taken along the line V-V of Fig. 4. In the drawings, a frame 61 of a driving device 15 (elevator hoist) has a receiving portion 62 (recess) open on one side surface (one side). Fixed to the frame 61 is a main shaft 63 (shaft) extending through the receiving portion 62.

A cylindrical (annular) first rotational member 64 is pivoted on the outer periphery of the frame 61 through the intermediation of a bearing. The first rotational member 64 is arranged coaxially with the main shaft 63. Formed in a part of the outer peripheral surface of the first rotational member 64 is a first driving sheave portion 68 around which the first main ropes 2 (upper car main ropes) are wrapped.

Between the frame 61 and the first rotational member 64, there is arranged an annular, first motor portion 65 (first electric motor). The first motor portion 65 has a first armature 66 consisting of a plurality of permanent magnets fixed to the inner peripheral surface of the first rotational member 64 and a first stator 67 fixed to the outer peripheral surface of the frame 61 and opposed to the first armature 66. The first rotational member 64 is rotated around the axis of the main shaft 63 by energizing the first stator 67. Further, a first hoist 69 has the first motor portion 65 and the first rotational member 64.

Fitted into the receiving portion 62 is a second rotational member 71 having an indented portion 70 (recess) open on one side. The second rotational member 71 is rotatably mounted to the main shaft 63 through the intermediation of a bearing. In a part of the outer peripheral surface of the second rotational member 71 near the other side surface, there is formed a second driving sheave portion 72 around which the second main ropes 5 are wrapped. The first driving sheave portion 68 is arranged nearer to one side surface than the second driving sheave portion 72.

Between the frame 61 and the second rotational member 71, there is arranged an annular, second motor portion 73 (second electric motor). The second motor portion 73 has a second armature 74 consisting of a plurality of permanent magnets fixed to the outer peripheral surface of the second rotational member 71 and a second stator 75 fixed to the frame 61 and opposed to the second armature 74. The second rotational member 71 is rotated around the axis of the main shaft 63 within the receiving portion 62 by energizing the second stator 75. Further, a second hoist 76 has the second motor portion 73 and the second rotational member 71.

On the radially outer side of the first rotational member 64, there is arranged a first braking machine corresponding to the first rotational member, that is, a first brake device 77 capable of braking the rotation of the first rotational member 64. The first brake device 77 is mounted on the frame 61. Further, the first brake device 77 has a first brake pad 78 serving as a first braking member capable of moving toward and away from a first braking surface 87 formed on the outer peripheral surface of the first rotational member 64, and a first driving mechanism 79 causing the first brake pad 78 to move toward and away from the first rotational member 64. The rotation of the first rotational member 64 is braked when the first brake pad 78 comes into contact with the first rotational member 64.

The first driving mechanism 79 has a first actuator portion 80 (first braking arm) on which the first brake pad 78 is provided (mounted), a first braking spring 81 serving as an urging portion for urging the first actuator portion 80 so as to bring the first brake pad 78 into contact with the first braking surface 87, and a first electromagnet 88 (first electromagnet mechanism) for separating the first brake pad 78 from the first braking surface 87 against the urging force of the first braking spring 81. The first brake pad 78 is opposed to the first braking surface 87. The first brake pad 78 is brought into contact with and pressed against the first braking surface 87 through the first actuator portion 80 by the first braking spring 81, and the first brake pad 78 is separated from the first braking surface 87 by energizing the first electromagnet 88.

Arranged in the indented portion 70 is a second braking machine corresponding to the second rotational member 71, that is, a second brake device 82 capable of braking the rotation of the second rotational member 71. The second brake device 82 is mounted on the main shaft 63. Further, the second brake device 82 has a second brake pad 83 serving as a second braking member capable of moving toward and away from a second braking surface 89 formed on the inner peripheral surface of the dent portion 70, and a second driving mechanism 84 for causing the second brake pad 83 to move toward and away from the second rotational member 71. The rotation of the second rotational member 71 is braked when the second brake pad 83 comes into contact with the second rotational member 71.

The second driving mechanism 84 has a second actuator portion 85 on which the second brake pad 83 is provided (mounted), a second braking spring 86 serving as an urging portion for urging the second actuator portion 85 in such a direction that the second brake pad 83 comes into contact with the second braking surface 89 (Fig. 5), and a second electromagnet 90 (second electromagnet mechanism) for separating the second brake pad 83 from the second braking surface 89 against the urging force of the second braking spring 86. The second magnet 90 is mounted to the main shaft 63. Further, the second brake pad 83 is opposed to the second braking surface 89. The second brake pad 83 is brought into contact with and pressed against the second braking surface 89 through the second actuator portion 85 by the second braking spring 86, and the second brake pad 83 is separated from the second braking surface 89 by energizing the second electromagnet 90. The other structures are the same as those of Embodiment 1.

The operation of the elevator apparatus constructed as described above is controlled by a control device (not shown) such that the first hoist 69 and the second hoist 76 are related in their driving. That is, through control of the driving device 15, the upper car 2 and the lower car 6 are raised and lowered within the hoistway 1 in a coordinated fashion so as not to collide with each other.

This elevator apparatus, which is a one-shaft-double-car type elevator apparatus, is improved in terms of transportation capacity due to the ascent/descent space corresponding to a single elevator apparatus, making it possible to effectively utilize the space of the building in which the elevator apparatus is installed. Further, since the first hoist 69 and the second hoist 76 are integrated with each other by being provided on one frame 61, the requisite installation area for the driving device 15 in a horizontal plane of projection in the hoistway 1 is reduced, making it possible to improve the efficiency with which the building space is utilized and to reduce in installation cost for the elevator apparatus.

Further, the first brake device 77 is arranged outside the first rotational member 64, and the second brake device 82 is arranged in the indented portion 70 provided in the second rotational member 71, so that it is possible to easily brake the rotation of the first rotational member 64 and the second rotational member 71 without making the thickness of the driving device 15 (the axial length of the main shaft 63) larger than is necessary. That is, it is possible to effectively utilize the space in the driving device 15 and to reduce its size, making it possible to reduce the requisite installation area. Thus, it is possible to improve the efficiency with which the space of the building in which the elevator apparatus is installed is utilized, and to reduce the installation cost of the elevator apparatus.

Further, since the receiving portion 62 and the indented portion 70 are open on the same side (one side), the second brake device 82 can be easily mounted and removed in the indented portion 70 through operation from one side. This makes it possible to reduce the space for maintenance operations, and to facilitate the maintenance operations for the second brake device 82. Further, the degree of freedom in the arrangement of the other elevator equipment (not shown) inside the hoistway 1 is also increased, so that the utilization efficiency for the space of the building in which the elevator is installed is improved, and it is possible to reduce the installation cost of the elevator.

Further, the second brake device 82 is arranged at a position corresponding to the indented portion 70 open on one side of the frame 61, and the first brake device 77 is arranged on the outer peripheral side of the first rotational member 64 and on the same side as the opening of the receiving portion 62 of the frame 61, that is, the first brake device 77 and the second brake device 82 are arranged so as to allow operation from one side, whereby it is possible to perform maintenance on the first and second brake devices 77 and 82 from the same side (the opening side of the receiving portion 62), making it possible to further reduce the space for maintenance operations. Further, it is possible to further facilitate maintenance operations. As a result, it is possible to increase the degree of freedom in the arrangement of the other elevator equipment (not shown) in the hoistway 1.

Further, there is provided the second rotational member 71 arranged so as to be fitted into the receiving portion 62 of the frame 61 and pivoted on the main shaft 63, and the cylindrical, first rotational member 64 is pivoted on the outer periphery of the frame 61. As a result, it is possible to reduce the size of the driving device 15 and to reduce the requisite installation area for the same. Thus, it is possible to improve the utilization efficiency for the space of the building and to reduce the installation cost of the elevator apparatus.

## Claims

1. An elevator driving device which raises and lowers a first car (3) suspended by a first main rope (2) and a second car (6) suspended by a second main rope (5) independently,
the elevator driving device comprising:
a first hoist (16) having an annular, first motor portion (25), and an annular, first rotational member (26) including a first driving sheave portion (30) which is rotated by the first motor portion (25) and around which the first main rope (2) is wrapped; and
a second hoist (18) having a second motor portion (40) arranged on the inner side of the first hoist (16), and a second rotational member (41) including a second driving sheave portion (45) which is rotated by the second motor portion (40) and around which the second main rope (5) is wrapped.

2. An elevator driving device according to Claim 1, further comprising:
a first brake device (17) having a first brake disc (33) extending from the outer periphery of the first rotational member (26) perpendicularly with respect to the rotation axis of the first rotational member (26) and adapted to rotate integrally with the first rotational member (26), a first braking member (34) capable of moving toward and away from the first brake disc (33), and a first driving mechanism (35) for displacing the first braking member (34) so as to move the first braking member (34) toward and away from the first brake disc (33), and for braking rotation of the first brake disc; and
a second brake device (19) having a second brake disc (48) extending from the outer periphery of the second rotational member (41) perpendicularly with respect to the rotation axis of the second rotational member (41) and adapted to rotate integrally with the second rotational member (41), a second braking member (49) capable of moving toward and away from the second brake disc (48), and a second driving mechanism (50) for displacing the second braking member (49) so as to move the second braking member (49) toward and away from the second brake disc (48), and for braking rotation of the second brake disc (48).

3. An elevator driving device according to Claim 2, wherein the first brake disc (33) extends from the first driving sheave portion (30), and wherein the second brake disc (48) extends from the second driving sheave portion (45).

4. An elevator driving device according to Claim 2, wherein a plurality of first braking members (34) are arranged at intervals in the circumferential direction of the first brake disc (33), and
a plurality of first driving mechanisms (35) are arranged at the same positions as the first braking members (34) with respect to the circumferential direction of the first brake disc (33).

5. An elevator driving device according to Claim 4, wherein when the first brake device (17) operates, the first driving mechanisms (35) bring the first braking members (34) into contact with the first brake disc (33) with a slight time lag between each braking member (35).

6. An elevator driving device according to Claim 2, wherein a plurality of second braking members (49) are arranged at intervals in the circumferential direction of the second brake disc (48), and
a plurality of second driving mechanisms (50) are arranged at the same positions as the second braking members (49) with respect to the circumferential direction of the second brake disc (48).

7. An elevator driving device according to Claim 6, wherein when the second brake device (19) operates, the second driving mechanisms (50) bring the second braking members (49) into contact with the second brake disc (48) with slight time lag between each braking member (49).

8. An elevator driving device according to Claim 1, **characterized in that**:
the device further comprises:
a first brake device (77) capable of braking rotation of the first rotational member (64); and
a second brake device (82) capable of braking rotation of the second rotational member (71),
with an indented portion (70) provided in the second rotational member (71), the first brake device (77) being arranged on the outer peripheral side of the first rotational member (64), and the second brake device (82) being arranged in the indented portion (70).

9. An elevator driving device, **characterized in that** the device comprises:
a frame (61) having a receiving portion (62) open on one side;
a shaft (63) provided so as to extend through the receiving portion (62) of the frame (61);
a second rotational member (71) provided with an indented portion (70) open on one side, arranged so as to be fitted into the receiving portion (62) of the frame (61), and pivoted on the shaft (63);
a second electric motor (73) composed of a second armature (74) provided in the outer periphery of the second rotational member (71) and a second stator (75) winding provided on the inner surface of the receiving portion (62) of the frame (61) opposed to the second armature (74);
a second driving sheave (72) formed in the outer periphery and near the other side surface of the second rotational member (71);
a first rotational member (64) formed in a cylindrical shape and pivoted on the outer periphery of the frame (61) through the inner surface thereof;
a first electric motor (65) composed of a first armature (66) provided on the inner periphery of the first rotational member (64) and a first stator (67) winding provided on the outer surface of the frame (61) opposed to the first armature (66); and
a first driving sheave (68) formed in the outer periphery of the first rotational member (64) and arranged near one side surface thereof.

10. An elevator driving device according to Claim 9, **characterized by** further comprising a second brake device (82) provided in an indented portion (70) of the second rotational member (71) and a first brake device (77) provided in the outer periphery of the first rotational member (64).

## Patentansprüche

1. Aufzugantriebsvorrichtung, die eine durch ein erstes Hauptseil (2) aufgehängte erste Kabine (3) und eine durch ein zweites Hauptseil (5) aufgehängte zweite Kabine (6) unabhängig anhebt und absenkt, wobei die Aufzugsantriebsvorrichtung umfasst:
ein erstes Hebemittel (16) mit einem ringförmigen ersten Motorabschnitt (25) und einem ringförmigen ersten Drehbauteil (26) mit einem ersten Antriebsscheibenabschnitt (30), das durch den ersten Motorabschnitt (25) gedreht wird und um welches das erste Hauptseil (2) gewunden ist, und
ein zweites Hebemittel (18) mit einem an der Innenseite des ersten Hebemittels (16) angeordneten zweiten Motorabschnitt (40) und einem zweiten Drehbauteil (41) mit einem zweiten Antriebsscheibenabschnitt (45), das durch den zweiten Motorabschnitt (40) gedreht wird und um welches das zweite Hauptseil (5) gewunden ist.

2. Aufzugantriebsvorrichtung gemäß Anspruch 1, weiter umfassend:
eine erste Bremsvorrichtung (17) mit einer ersten Bremsscheibe (33), die sich vom Außenumfang des ersten Drehbauteils (26) senkrecht bezüglich der Drehachse des ersten Drehbauteils (26) erstreckt und sich integral mit dem ersten Drehbauteil (26) drehen kann, mit einem ersten Bremsbauteil (34), das sich in Richtung der ersten Bremsscheibe (33) und von dieser weg bewegen kann, und mit einem ersten Antriebsmechanismus (35) zum Auslenken des ersten Bremsbauteils (34), um das erste Bremsbauteil (34) in Richtung der ersten Bremsscheibe (33) und von dieser weg zu bewegen, und um eine Drehung der ersten Bremsscheibe zu bremsen, und
eine zweite Bremsvorrichtung (19) mit einer zweiten Bremsscheibe (48), die sich vom Außenumfang des zweiten Drehbauteils (41) senkrecht bezüglich der Drehachse des zweiten Drehbauteils (41) erstreckt und sich integral mit dem zweiten Drehbauteil (41) drehen kann, mit einem zweiten Bremsbauteil (49), das sich in Richtung der zweiten Bremsscheibe (48) und von dieser weg bewegen kann, und mit einem zweiten Antriebsmechanismus (50) zum Auslenken des zweiten Bremsbauteils (49), um das zweite Bremsbauteil (49) in Richtung der zweiten Bremsscheibe (48) und von dieser weg zu bewegen, und um eine Drehung der zweiten Bremsscheibe (48) zu bremsen.

3. Aufzugantriebsvorrichtung gemäß Anspruch 2, bei der sich die erste Bremsscheibe (33) vom ersten Antriebsscheibenabschnitt (30) erstreckt, und bei der sich die zweite Bremsscheibe (48) vom zweiten Antriebsscheibenabschnitt (45) erstreckt.

4. Aufzugantriebsvorrichtung gemäß Anspruch 2, bei der eine Vielzahl von ersten Bremsbauteilen (34) in Intervallen in der Umfangsrichtung der ersten Bremsscheibe (33) angeordnet ist, und
eine Vielzahl der ersten Antriebsmechanismen (35) an den gleichen Positionen wie die ersten Bremsbauteile (34) bezüglich der Umfangsrichtung der ersten Bremsscheibe (33) angeordnet ist.

5. Aufzugantriebsvorrichtung gemäß Anspruch 4, bei der, wenn die erste Bremsvorrichtung (34) arbeitet, die ersten Antriebsmechanismen (35) die ersten Bremsbauteile (34) mit der ersten Bremsscheibe (33) mit einer leichten Zeitverzögerung zwischen jedem Bremsbauteil (35) in Kontakt bringen.

6. Aufzugantriebsvorrichtung gemäß Anspruch 2, bei der eine Vielzahl von zweiten Bremsbauteilen (49) in Intervallen in der Umfangsrichtung der zweiten Bremsscheibe (48) angeordnet ist, und
eine Vielzahl von zweiten Antriebsmechanismen (50) an den gleichen Positionen wie die zweiten Bremsbauteile (49) bezüglich der Umfangsrichtung der zweiten Bremsscheibe (48) angeordnet ist.

7. Aufzugantriebsvorrichtung gemäß Anspruch 6, bei der, wenn die zweite Bremsvorrichtung (19) arbeitet, die zweiten Antriebsmechanismen (50) die zweiten Bremsbauteile (49) mit der zweiten Bremsscheibe (48) mit einer leichten Zeitverzögerung zwischen jedem Bremsbauteil (49) in Kontakt bringen.

8. Aufzugantriebsvorrichtung gemäß Anspruch 1, **dadurch gekennzeichnet, dass**:
die Vorrichtung weiter umfasst:
eine erste Bremsvorrichtung (77), die eine Drehung des ersten Drehbauteils (64) bremsen kann, und
eine zweite Bremsvorrichtung (82), die eine Drehung des zweiten Drehbauteils (71) bremsen kann,
wobei ein eingerückter Abschnitt (70) im zweiten Drehbauteil (71) vorgesehen ist, die erste Bremsvorrichtung (77) an der Außenumfangsseite des ersten Drehbauteils (64) angeordnet ist, und die zweite Bremsvorrichtung (82) im eingerückten Abschnitt (70) angeordnet ist.

9. Aufzugantriebsvorrichtung, **dadurch gekennzeichnet, dass** die Vorrichtung umfasst:
einen Rahmen (61) mit einem an einer Seite offenen Empfangsabschnitt (62),
eine Welle (63), die derart vorgesehen ist, dass sie sich durch den Empfangsabschnitt (62) des Rahmens (61) erstreckt,
ein zweites Drehbauteil (71), das mit einem an einer Seite offenen eingerückten Abschnitt (70) versehen ist, das derart angeordnet ist, dass es in den Empfangsabschnitt (62) des Rahmens (61) eingepasst ist und an der Welle (63) geschwenkt wird,
einen zweiten Elektromotor (73), der einen im Außenumfang des zweiten Drehbauteils (71) vorgesehenen zweiten Anker (74) und eine an der Innenfläche des gegenüber dem zweiten Anker (74) befindlichen Empfangsabschnitts (62) des Rahmens (61) vorgesehene zweite Statorwindung (75) aufweist,
eine zweite Antriebsscheibe (72), die im Außenumfang und nahe der anderen Seitenfläche des zweiten Drehbauteils (71) ausgebildet ist,
ein erstes Drehbauteil (64), das in einer Zylindergestalt ausgebildet ist und am Außenumfang des Rahmens (61) durch die Innenfläche hiervon geschwenkt ist,
einen ersten Elektromotor (65), der aus einem am Innenumfang des ersten Drehbauteils (64) vorgesehenen ersten Anker (66) und einer an der gegenüber dem ersten Anker (66) befindlichen Außenfläche des Rahmens (61) vorgesehenen ersten Statorwindung (67) gebildet wird, und
eine erste Antriebsscheibe (68), die im Außenumfang des ersten Drehbauteils (64) ausgebildet ist und nahe einer Seitenfläche hiervon angeordnet ist.

10. Aufzugantriebsvorrichtung gemäß Anspruch 9, **dadurch gekennzeichnet, dass** sie weiter umfasst: eine zweite Bremsvorrichtung (82), die in einem eingerückten Abschnitt (70) des zweiten Drehbauteils (71) vorgesehen ist, und eine erste Bremsvorrichtung (77), die im Außenumfang des ersten Drehbauteils (64) vorgesehen ist.

## Revendications

1. Dispositif d'entraînement d'ascenseur qui élève et abaisse indépendamment une première cabine (3) suspendue par un premier câble principal (2) et une seconde cabine (6) suspendue par un second câble principal (5),
le dispositif d'entraînement d'ascenseur comprenant :
un premier palan (16) ayant une première partie formant moteur annulaire (25) et un premier élément rotatif annulaire (26) incluant une première partie formant poulie d'entraînement (30) qui est mise en rotation par la première partie formant moteur (25) et autour de laquelle le premier câble principal (2) est enroulé ; et
un second palan (18) ayant une seconde partie formant moteur (40) agencée sur le côté intérieur du premier palan (16), et un second élément rotatif (41) incluant une seconde partie formant poulie d'entraînement (45) qui est mise en rotation par la seconde partie formant moteur (40) et autour de laquelle le second câble principal (5) est enroulé.

2. Dispositif d'entraînement d'ascenseur selon la revendication 1, comprenant en outre :
un premier dispositif formant frein (17) ayant un premier disque de frein (33) s'étendant à partir de la périphérie extérieure du premier élément rotatif (26) perpendiculairement par rapport à l'axe de rotation du premier élément rotatif (26) et conçu pour tourner d'un seul tenant avec le premier élément rotatif (26), un premier élément de freinage (34) susceptible de se rapprocher et de s'écarter du premier disque de frein (33), et un premier mécanisme d'entraînement (35) pour déplacer le premier élément de freinage (34) de façon à approcher et à écarter le premier élément de freinage (34) du premier disque de frein (33), et pour freiner la rotation du premier disque de frein ; et
un second dispositif formant frein (19) ayant un second disque de frein (48) s'étendant à partir de la périphérie extérieure du second élément rotatif (41) perpendiculairement par rapport à l'axe de rotation du second élément rotatif (41) et conçu pour tourner d'un seul tenant avec le second élément rotatif (41), un second élément de freinage (49) susceptible de se rapprocher et de s'écarter du second disque de frein (48), et un second mécanisme d'entraînement (50) pour déplacer le second élément de freinage (49) de façon à approcher et à écarter le seconde élément de freinage (49) du second disque de frein (48), et pour freiner la rotation du second disque de frein (48).

3. Dispositif d'entraînement d'ascenseur selon la revendication 2, dans lequel le premier disque de frein (33) s'étend à partir de la première partie formant poulie d'entraînement (30), et dans lequel le second disque de frein (48) s'étend à partir de la seconde partie formant poulie d'entraînement (45).

4. Dispositif d'entraînement d'ascenseur selon la revendication 2, dans lequel une pluralité de premiers éléments de freinage (34) sont agencés à certains intervalles dans la direction circonférentielle du premier disque de frein (33), et
une pluralité de premiers mécanismes d'entraînement (35) sont agencés aux mêmes positions que les premiers éléments de freinage (34) par rapport à la direction circonférentielle du premier disque de frein (33).

5. Dispositif d'entraînement d'ascenseur selon la revendication 4, dans lequel, lorsque le premier dispositif formant frein (17) fonctionne, les premiers mécanismes d'entraînement (35) amènent les premiers éléments de freinage (34) en contact avec le premier disque de frein (33) avec un léger retard de temps entre chaque élément de freinage (35).

6. Dispositif d'entraînement d'ascenseur selon la revendication 2, dans lequel une pluralité de seconds éléments de freinage (49) sont agencés à certains intervalles dans la direction circonférentielle du second disque de frein (48), et
une pluralité de seconds mécanismes d'entraînement (50) sont agencés aux mêmes positions que les seconds éléments de freinage (49) par rapport à la direction circonférentielle du second disque de frein (48).

7. Dispositif d'entraînement d'ascenseur selon la revendication 6, dans lequel, lorsque le second dispositif formant frein (19) fonctionne, les seconds mécanismes d'entraînement (50) amènent les seconds éléments de freinage (49) en contact avec le second disque de frein (48) avec un léger retard de temps entre chaque élément de freinage (49).

8. Dispositif d'entraînement d'ascenseur selon la revendication 1, **caractérisé en ce que** :
le dispositif comprend en outre :
un premier dispositif formant frein (77) susceptible de freiner la rotation du premier élément rotatif (64) ; et
un second dispositif formant frein (82) susceptible de freiner la rotation du second élément rotatif (71),
une partie indentée (70) étant prévue dans le second élément rotatif (71), le premier dispositif formant frein (77) étant agencé sur le côté périphérique extérieur du premier élément rotatif (64), et le second dispositif formant frein (82) étant agencé dans la partie indentée (70).

9. Dispositif d'entraînement d'ascenseur, **caractérisé en ce que** le dispositif comprend :
un châssis (61) ayant une partie de réception (62) ouverte sur un côté ;
un arbre (63) disposé de façon à s'étendre à travers la partie de réception (62) du châssis (61) ;
un second élément rotatif (71) muni d'une partie indentée (70) ouverte sur un côté, agencé de façon à être ajusté dans la partie de réception (62) du châssis (61), et pivoté sur l'arbre (63) ;
un second moteur électrique (73) composé d'une seconde armature (74) disposée dans la périphérie extérieure du second élément rotatif (71) et un second enroulement de stator (75) disposé sur la surface intérieure de la partie de réception (62) du châssis (61) opposée à la seconde armature (74) ;
une seconde poulie d'entraînement (72) formée dans la périphérie extérieure et près de l'autre surface latérale du second élément rotatif (71) ;
un premier élément rotatif (64) formé en une forme cylindrique et pivoté sur la périphérie extérieure du châssis (61) à travers la surface intérieure de ce dernier ;
un premier moteur électrique (65) composé d'une première armature (66) disposée sur la périphérie intérieure du premier élément rotatif (64) et un premier enroulement de stator (67) disposé sur la surface extérieure du châssis (61) opposée à la première armature (66) ; et
une première poulie d'entraînement (68) formée dans la périphérie extérieure du premier élément rotatif (64) et agencée près d'une surface latérale de ce dernier.

10. Dispositif d'entraînement d'ascenseur selon la revendication 9, **caractérisé** comme comprenant en outre un second dispositif formant frein (82) disposé dans une partie indentée (70) du second élément rotatif (71) et un premier dispositif formant frein (77) disposé dans la périphérie extérieure du premier élément rotatif (64).
